(19) Europäisches Patentamt
European Patent Office
Office européen des brevets

(11) **EP 4 080 065 A1**

(12) **EUROPÄISCHE PATENTANMELDUNG**

(43) Veröffentlichungstag:
26.10.2022 Patentblatt 2022/43

(21) Anmeldenummer: 22169191.8

(22) Anmeldetag: **21.04.2022**

(51) Internationale Patentklassifikation (IPC):
**F15B 15/28** (2006.01)    **B60P 1/28** (2006.01)

(52) Gemeinsame Patentklassifikation (CPC):
**F15B 15/2838; B60P 1/283;** F15B 2211/20523;
F15B 2211/632; F15B 2211/633; F15B 2211/6333;
F15B 2211/634; F15B 2211/7051; F15B 2211/7656

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **22.04.2021 DE 102021110349**

(71) Anmelder: **Franz Xaver Meiller Fahrzeug- und Maschinenfabrik**
**- GmbH & Co KG**
**80997 München (DE)**

(72) Erfinder: **MAAßEN, Roland**
**80807 München (DE)**

(74) Vertreter: **Feller, Frank**
**Weickmann & Weickmann**
**Patent- und Rechtsanwälte PartmbB**
**Postfach 860 820**
**81635 München (DE)**

(54) **HYDRAULIKSYSTEM FÜR EINE ARBEITSMASCHINE**

(57) Die vorliegende Erfindung betrifft ein Hydrauliksystem (10) für eine Arbeitsmaschine, umfassend einen Antriebsmotor (12), eine durch den Antriebsmotor (12) betriebene Hydraulikpumpe (16), einen Hydraulikzylinder (24), welcher von der Hydraulikpumpe (16) über einen Hydraulikkreis (18) mit einem Hydraulikfluid beaufschlagbar ist, wobei dem Hydraulikkreis (18) wenigstens ein schaltbares Ventil (22) zugeordnet ist, welches dazu eingerichtet ein Zuführen von Hydraulikfluid zu dem Hydraulikzylinder (24) selektiv freizugeben und zu sperren, einen Hydrauliktank (20) zum Aufnehmen von Hydraulikfluid, und ein System zum Berechnen einer momentanen Arbeitsposition eines Hydraulikzylinders in einer Arbeitsmaschine, umfassend wenigstens eine Sensoreinheit (28, 30, 32, 34, 36), welche dazu eingerichtet ist, eine Größe zu erfassen, welche einen Volumenstrom von Hydraulikfluid zu dem Hydraulikzylinder (24) repräsentiert, und eine Berechnungseinheit (26), welche betriebsmäßig mit der wenigstens einen Sensoreinheit (28, 30, 32, 34, 36) gekoppelt und dazu eingerichtet ist, anhand der von der wenigstens einen Sensoreinheit (28, 30, 32, 34, 36) erfassten Daten auf Grundlage einer bekannten Geometrie des Hydraulikzylinders (24) die momentane Arbeitsposition des Hydraulikzylinders (24) zu berechnen. Des Weiteren betrifft die Erfindung ein Verfahren zum Betreiben eines solchen Systems.

Fig. 1

EP 4 080 065 A1

**Beschreibung**

Die vorliegende Erfindung betrifft ein Hydrauliksystem für eine Arbeitsmaschine, eine Arbeitsmaschine, umfassend ein derartiges Hydrauliksystem, sowie ein Verfahren zum Berechnen einer momentanen Arbeitsposition eines Hydraulikzylinders in dem erfindungsgemäßen Hydrauliksystem.

In vielerlei Typen von Arbeitsmaschinen, in welchen Hydraulikzylinder zum Durchführen von Arbeitsvorgängen zum Einsatz kommen, kann es wichtig sein, die momentane Arbeitsposition bzw. den momentanen Hub solcher Zylinder genau zu kennen, um beispielsweise mit hoher Präzision Positionieraufgaben durchführen zu können oder um eine direkte Rückmeldung über den Betrieb des entsprechenden Hydraulikzylinders zu erhalten, was in vielerlei Regelungsvorgängen notwendig sein kann.

Zur Erfassung bzw. Berechnung der momentanen Arbeitsposition eines Hydraulikzylinders in einem Hydrauliksystem sind diverse Möglichkeiten etabliert, beispielsweise Seilzuggeber, welche indirekt den momentanen Hub des Hydraulikzylinders erfassen, oder auch magnetische Systeme, welche direkt oder indirekt die Kolbenposition innerhalb des Zylinders über magnetische Induktion erfassen.

Die genannten Systeme sind allerdings mit hohen Kosten verbunden und benötigen Bauraum direkt in der Umgebung des Hydraulikzylinders, was in vielerlei Anwendungen unerwünscht ist. Dementsprechend besteht hier ein Bedarf nach einer vereinfachten und platzsparenden Möglichkeit, in einem Hydrauliksystem für eine Arbeitsmaschine die momentane Arbeitsposition eines Hydraulikzylinders erfassen zu können.

Zur Lösung dieser Aufgabe wird erfindungsgemäß ein Hydrauliksystem für eine Arbeitsmaschine vorgeschlagen, umfassend einen Antriebsmotor, eine durch den Antriebsmotor betriebene Hydraulikpumpe, einen Hydraulikzylinder, welcher von der Hydraulikpumpe über einen Hydraulikkreis mit einem Hydraulikfluid beaufschlagbar ist, wobei dem Hydraulikkreis wenigstens ein schaltbares Ventil zugeordnet ist, welches dazu eingerichtet ist, ein Zuführen von Hydraulikfluid zu dem Hydraulikzylinder selektiv freizugeben und zu sperren, einen Hydrauliktank zum Aufnehmen von Hydraulikfluid und ein System zum Berechnen einer momentanen Arbeitsposition des Hydraulikzylinders, wiederum umfassend wenigstens eine Sensoreinheit, welche dazu eingerichtet ist, eine Größe zu erfassen, welche einen Volumenstrom von Hydraulikfluid zu dem Hydraulikzylinder repräsentiert, und eine Berechnungseinheit, welche betriebsmäßig mit der wenigstens einen Sensoreinheit gekoppelt und dazu eingerichtet ist, anhand der von der wenigstens einen Sensoreinheit erfassten Daten auf Grundlage einer bekannten Geometrie des Hydraulikzylinders die momentane Arbeitsposition des Hydraulikzylinders zu berechnen.

Dementsprechend ist es der Verdienst der Erfinder der vorliegenden Erfindung, erkannt zu haben, dass die momentane Arbeitsposition bzw. der Hub eines Hydraulikzylinders ebenfalls bestimmt werden kann, indem das Volumen an Hydraulikfluid oder Öl bestimmt wird, welches in den Zylinder mit bekannten geometrischen Eigenschaften strömt. Hierbei kann davon ausgegangen werden, dass der Hub des Zylinders dem eingeströmten Fluidvolumen geteilt durch die Querschnittsfläche des Zylinders entspricht.

In diesem Zusammenhang bestehen prinzipiell mehrere Möglichkeiten, den Volumenstrom des Hydraulikfluids zu bestimmen, so dass an unterschiedliche Typen von Sensoreinheiten gedacht werden kann, welche eine den Volumenstrom repräsentierenden Größe erfassen, d.h. eine Größe, welche direkten oder indirekten Einfluss auf den Volumenstrom hat. Beispielsweise kann die Sensoreinheit des erfindungsgemäßen Systems wenigstens einen Durchflusssensor umfassen, welcher dazu eingerichtet ist, einen Volumenstrom von Hydraulikfluid in dem Hydraulikkreis direkt zu messen.

Ferner könnte daran gedacht werden, dass die wenigstens eine Sensoreinheit einen der Hydraulikpumpe zugeordneten Drehzahlsensor umfasst, welcher dazu eingerichtet ist, die Drehzahl der Hydraulikpumpe zu messen. Dieses Messprinzip beruht darauf, dass die Fördermenge von Hydraulikpumpen pro Umdrehung in der Regel bekannt ist, so dass über eine Integration der Drehzahl über die Betriebszeit ebenfalls auf den Volumenstrom zurückgeschlossen werden kann, der zu dem Hydraulikzylinder gefördert wird.

Eine weitere Alternative kann darin bestehen, dass die wenigstens eine Sensoreinheit einen dem Antriebsmotor zugeordneten Drehzahlsensor umfassen kann, welcher dazu eingerichtet ist, die Drehzahl des Antriebsmotors zu messen. Hierbei kann in ähnlicher Weise wie eben beschrieben aus der Drehzahl des Antriebsmotors wiederum auf die Drehzahl der Hydraulikpumpe rückgeschlossen werden und über die bekannte Fördermenge pro Umdrehung der Hydraulikpumpe der Volumenstrom bestimmt werden. Hierbei ist ggf. das Übersetzungsverhältnis eines zwischen dem Antriebsmotor und der Hydraulikpumpe vorgesehenen Getriebes zu berücksichtigen, beispielsweise wenn die Hydraulikpumpe über einen Nebenabtrieb eines auch für andere Zwecke eingesetzten Motors angetrieben wird.

Eine weitere mögliche Strategie kann darin bestehen, dass die wenigstens eine Sensoreinheit einen dem Hydrauliktank zugeordneten Füllstandsensor umfassen kann, welcher dazu eingerichtet ist, den Füllstand von Hydraulikfluid in dem Hydrauliktank zu messen. Auf diese Weise kann durch die Bestimmung der entnommenen Fluidmenge aus dem Hydrauliktank auf die dem Hydraulikzylinder zugeführte Fluidmenge geschlossen und für diesen ebenfalls auf diese Weise die momentane Arbeitsposition berechnet werden.

Hierbei versteht sich, dass aus Gründen der Redundanz bzw. der Verbesserung und Plausibilisierung der einzelnen Messwerte der genannten Sensortypen diese jeweils einzeln oder mehrfach und in beliebigen Kombinationen untereinander vorgesehen sein können, wobei dann durch die Berechnungseinheit zum einen die Werte hinsichtlich ihrer Konsistenz gegeneinander geprüft werden können und andererseits beispielsweise über einen gewichteten oder ungewichteten Mittelwert systematische und statistische Schwankungen in den Messwerten verringert werden können.

Weiterhin kann die wenigstens eine Sensoreinheit einen dem schaltbaren Ventil zugeordneten Ventilsensor umfassen, welcher dazu eingerichtet ist, eine Schaltdauer des Ventils zu messen und/oder die Berechnungseinheit kann dazu eingerichtet sein, Daten von einer das schaltbare Ventil ansteuernden Steuereinrichtung zu empfangen, welche eine Schaltdauer des Ventils repräsentieren. Hierbei versteht es sich, dass je nach Typ und Position der eingesetzten Sensoreinheit ein derartiger Ventilsensor überflüssig sein kann, beispielsweise, wenn ein Durchflusssensor verwendet wird, welcher in dem Hydraulikkreis zwischen dem schaltbaren Ventil und dem Hydraulikzylinder angeordnet ist und somit nur während der relevanten Betriebsdauer des Zylinders durchströmt wird und entsprechende Daten liefert.

Weiterhin versteht es sich, dass die in dem erfindungsgemäßen System verwendete Berechnungseinheit durch beliebige geeignete Datenverarbeitungsmittel gebildet sein kann, beispielsweise einen Mikrocontroller mit Ein- und Ausgängen für Sensordaten und auszugebende Berechnungsdaten sowie einem Speicher, in welchem zum Betrieb der Berechnungseinheit notwendige Software sowie Geometriedaten des Hydraulikzylinders hinterlegt sind. Die derart gewonnenen Berechnungsdaten können dann an eine zentrale Steuereinheit der Arbeitsmaschine weitergegeben werden, die ggf. Regelungsprozesse anhand der Berechnungsdaten durchführen oder beispielsweise auch Notstoppfunktionen implementieren kann, wenn die Ausgabe der Berechnungseinheit unerwartete Werte liefert. Alternativ oder zusätzlich können die Berechnungsdaten auch direkt an eine Anzeige für einen Benutzer ausgegeben werden. Hierbei kann die Berechnungseinheit nicht nur betriebsmäßig mit anderen Steuereinheiten gekoppelt sein, wie beispielsweise der angesprochenen zentralen Steuereinheit der Arbeitsmaschine, sondern ihre Funktion kann auch direkt auf derselben Hardware implementiert sein.

Gemäß einem weiteren Aspekt betrifft die vorliegende Erfindung eine Arbeitsmaschine, insbesondere ein Kipperfahrzeug, umfassend ein erfindungsgemäßes Hydrauliksystem der eben beschriebenen Art. Kipperfahrzeuge, wie beispielsweise Abrollkipper, Absetzkipper und Dreiseitenkipper verwenden in der Regel einen oder mehrere Hydraulikzylinder, um das Abladen und ggf. Aufsetzen von Lasten zu bewerkstelligen. Hierbei ist zur Sicherstellung des ordnungsgemäßen Betriebs häufig gewünscht, die momentane Arbeitsposition dieser Zylinder zu kennen, so dass es sich hierbei um einen idealen Anwendungsfall für das oben beschriebene erfindungsgemäße Hydrauliksystem handelt.

Insbesondere kann in derartigen Ausführungsformen der Arbeitsmotor des Hydrauliksystems durch einen Motor der Arbeitsmaschine gebildet sein, welcher dazu eingerichtet ist, über einen Nebenabtrieb die Hydraulikpumpe zu betreiben.

Des Weiteren betrifft die vorliegende Erfindung ein Verfahren zum Berechnen einer momentanen Arbeitsposition eines Hydraulikzylinders in einem derartigen Hydrauliksystem, umfassend die Schritte eines Betreibens des Antriebsmotors zum Betreiben der Hydraulikpumpe, eines Erfassens der Größe, welche den Volumenstrom von Hydraulikfluid zu dem Hydraulikzylinder repräsentiert, durch die wenigstens eine Sensoreinheit und eines Berechnens der momentanen Arbeitsposition des Hydraulikzylinders anhand der von der wenigstens einen Sensoreinheit erfassten Daten auf Grundlage der bekannten Geometrie des Hydraulikzylinders durch die Berechnungseinheit.

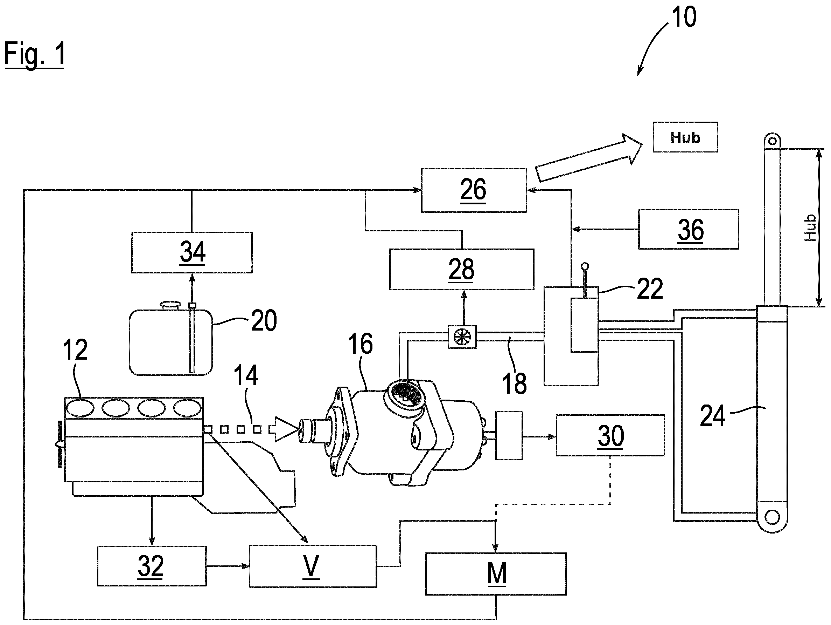

Weitere Merkmale und Vorteile der vorliegenden Erfindung werden aus der nachfolgenden Beschreibung einer Ausführungsform davon noch deutlicher, wenn diese zusammen mit der beiliegenden Figur 1 betrachtet wird.

Diese Figur 1 zeigt eine Ausführungsform eines erfindungsgemäßen Hydrauliksystems. Hierbei ist zu beachten, dass aus Gründen der Vollständigkeit eine Vielzahl von möglichen Sensoreinheiten vorgesehen sind, welche jedoch in alternativen Ausführungsformen und Varianten davon jeweils auch einzeln oder in beliebigen Kombinationen, sowie jeweils auch mehrfach und insbesondere redundant vorgesehen sein können.

In Figur 1 ist das erfindungsgemäße Hydrauliksystem ganz allgemein mit dem Bezugszeichen 10 bezeichnet und es kann beispielsweise in einem nicht weiter dargestellten Kipperfahrzeug zum Einsatz kommen, wobei zum Betrieb des Hydrauliksystems auf die Motorleistung des Antriebsmotors 12 des Kipperfahrzeugs zurückgegriffen wird, welcher dementsprechend auch eine Komponente des erfindungsgemäßen Hydrauliksystems bildet.

Dieser Antriebsmotor 12 treibt über einen schematisch in Fig. 1 dargestellten Nebenabtrieb 14 mit einem bekannten Übersetzungsverhältnis die Hydraulikpumpe 16 an, welche in einem Hydraulikkreis 18 zirkulierendes Hydraulikfluid/Hydrauliköl fördert. Das angesprochene Hydraulikfluid wird in einem Hydrauliktank 20 vorgehalten und gepuffert, aus welchem die Hydraulikpumpe 16 das Hydraulikfluid herausfördern kann. Aus Gründen der Übersichtlichkeit ist der Hydrauliktank 20 in Fig. 1 entfernt von der Hydraulikpumpe 16 und dem Hydraulikkreis 18 dargestellt, es versteht sich jedoch, dass entsprechende geeignete Förderleitungen zwischen dem Hydrauliktank 20 und der Hydraulikpump 16 vorgesehen sind.

Dem Hydraulikkreis 18 ist ferner ein schaltbares Ventil 22 zugeordnet, welches dazu ansteuerbar ist, ein Zuführen des Hydraulikfluids zu dem Hydraulikzylinder 24, dessen momentane Arbeitsposition bestimmt werden soll, selektiv freizugeben und zu sperren.

Weiterhin zeigt die Figur 1 schematisch eine Berechnungseinheit 26, welche die angesprochene Berechnung der momentanen Arbeitsposition des Hydraulikzylinders 24 durchführt und hierzu mit geeigneten Verarbeitungs-, Speicher- und Eingabe-/Ausgabemitteln versehen ist. Die hierfür notwendigen Daten erhält die Berechnungseinheit 26 von einer Mehrzahl von mit ihr betriebsmäßig verbundenen geeigneten Sensoreinheiten, insbesondere einem Durchflusssensor 28, welcher direkt einen Volumenstrom von Hydraulikfluid in dem Hydraulikkreis misst, einem der Hydraulikpumpe 16 zugeordneten Drehzahlsensor 30, welcher die Drehzahl der Hydraulikpumpe 16 misst, einem weiteren Drehzahlsensor 32, welcher dem Antriebsmotor 12 zugeordnet ist und dessen Drehzahl misst, sowie zuletzt einem Füllstandsensor 34, welcher dem Hydrauliktank 20 zugeordnet ist und den Füllstand von Hydraulikfluid in diesem bestimmt.

Hierbei erfolgt die Berechnung des Volumenstroms mit Hilfe der Drehzahlsensoren 30 und 32 unter Hinzuziehung der bekannten Fördermenge M pro Umdrehung der Hydraulikpumpe 16, ggf. unter Hinzuziehung des ebenfalls bekannten Übersetzungsverhältnisses V des Nebenabtriebs 14 bei Verwendung des weiteren Drehzahlsensors 32. Weiterhin umfasst das erfindungsgemäße System 10 einen Ventilsensor 36, welcher eine Schaltdauer des Ventils misst, so dass lediglich der während eines Betreibens des Hydraulikzylinders 24 geströmte Volumenstrom an Hydraulikfluid in die Berechnung eingeht. Alternativ könnten auch die zur Steuerung des steuerbaren Ventils 22 verwendeten Steuerdaten direkt ausgewertet werden, da bei einer selektiven Ansteuerung des Ventils 22 dessen Schaltzustand zu jedem Zeitpunkt bekannt ist.

Im Folgenden ist zuletzt eine beispielhafte Berechnung des Hubs des Hydraulikzylinders 24 durch die Berechnungseinheit 26 auf Grundlage von Messdaten der Drehzahl der Hydraulikpumpe 16 bzw. des Antriebsmotors 12 wiedergegeben, wobei für die entsprechende Hydraulikpumpe 16 bekannt ist, dass diese einen Nennvolumenstrom von 80 Liter pro Minute bei einer Drehzahl von 800 Umdrehungen pro Minute fördert.

Indem nun eine Messung der Drehzahl der Hydraulikpumpe 16 oder der Drehzahl des Antriebsmotors 12 unter Berücksichtigung der Übersetzung des Nebenabtriebs 14 durch die entsprechende Sensoreinheit 30 bzw. 32 verwendet wird, kann im hier vorgeführten Beispiel abgeleitet werden, dass die aktuelle Drehzahl der Hydraulikpumpe 16 1100 Umdrehungen pro Minute beträgt. Hieraus ergibt sich ein Volumenstrom von:

$$80\,\frac{l}{min} * \frac{1100\,{}^{U}\!/_{min}}{800\,{}^{U}\!/_{min}} = 110\,\frac{l}{min} = 1833333\,\frac{mm^3}{s}$$

Geht man nun weiterhin davon aus, dass im vorliegenden Beispiel zwei gleichartige Hydraulikzylinder versorgt werden, welche jeweils einen Zylinderdurchmesser von 160 mm aufweisen, so lässt sich die gesamte Kolbenfläche wie folgt berechnen:

$$2 * \left(\frac{\pi}{4} * 160mm^2\right) = 40212mm^2$$

Somit kann beispielsweise bei einer durch den Ventilsensor 36 erfassten Schaltdauer von 10 Sekunden der Hub bzw. die momentane Arbeitsposition der beiden Hydraulikzylinder berechnen werden als:

$$\frac{1833333\,{}^{mm^3}\!/_{s} * 10s}{40212mm^2} = 455{,}9mm$$

Der derart bestimmte Wert kann dann von der Berechnungseinheit 26 an eine in Fig. 1 nicht dargestellte Steuereinheit des Kipperfahrzeugs ausgegeben werden, die auf dieser Grundlage Regelungsvorgänge durchführen kann oder bei unerwarteten Ausgabewerten geeignete Maßnahmen einleiten kann. Alternativ oder zusätzlich könnte der bestimmte Wert auch mittels einer geeigneten Anzeigeeinheit für einen Benutzer des Fahrzeugs dargestellt und ggf. zuvor grafisch aufbereitet werden.

**Patentansprüche**

1.    Hydrauliksystem (10) für eine Arbeitsmaschine, umfassend:

- einen Antriebsmotor (12);
- eine durch den Antriebsmotor (12) betriebene Hydraulikpumpe (16);

- einen Hydraulikzylinder (24), welcher von der Hydraulikpumpe (16) über einen Hydraulikkreis (18) mit einem Hydraulikfluid beaufschlagbar ist,

wobei dem Hydraulikkreis (18) wenigstens ein schaltbares Ventil (22) zugeordnet ist, welches dazu eingerichtet ein Zuführen von Hydraulikfluid zu dem Hydraulikzylinder (24) selektiv freizugeben und zu sperren;

- einen Hydrauliktank (20) zum Aufnehmen von Hydraulikfluid; und

- ein System zum Berechnen einer momentanen Arbeitsposition eines Hydraulikzylinders in einer Arbeitsmaschine, umfassend:

- wenigstens eine Sensoreinheit (28, 30, 32, 34, 36), welche dazu eingerichtet ist, eine Größe zu erfassen, welche einen Volumenstrom von Hydraulikfluid zu dem Hydraulikzylinder (24) repräsentiert; und

- eine Berechnungseinheit (26), welche betriebsmäßig mit der wenigstens einen Sensoreinheit (28, 30, 32, 34, 36) gekoppelt und dazu eingerichtet ist, anhand der von der wenigstens einen Sensoreinheit (28, 30, 32, 34, 36) erfassten Daten auf Grundlage einer bekannten Geometrie des Hydraulikzylinders (24) die momentane Arbeitsposition des Hydraulikzylinders (24) zu berechnen.

2. Hydrauliksystem (10) nach Anspruch 1,
wobei die wenigstens eine Sensoreinheit einen Durchflusssensor (28) umfasst, welcher dazu eingerichtet ist, einen Volumenstrom von Hydraulikfluid in dem Hydraulikkreis (18) direkt zu messen.

3. Hydrauliksystem (10) nach einem der vorhergehenden Ansprüche, wobei die wenigstens eine Sensoreinheit einen der Hydraulikpumpe (16) zugeordneten Drehzahlsensor (30) umfasst, welcher dazu eingerichtet ist, die Drehzahl der Hydraulikpumpe (16) zu messen.

4. Hydrauliksystem (10) nach einem der vorhergehenden Ansprüche, wobei die wenigstens eine Sensoreinheit einen dem Antriebsmotor (12) zugeordneten Drehzahlsensor (32) umfasst, welcher dazu eingerichtet ist, die Drehzahl des Antriebsmotors (12) zu messen.

5. Hydrauliksystem (10) nach einem der vorhergehenden Ansprüche, wobei die wenigstens eine Sensoreinheit einen dem Hydrauliktank (20) zugeordneten Füllstandsensor (34) umfasst, welcher dazu eingerichtet ist, den Füllstand von Hydraulikfluid in dem Hydrauliktank (20) zu messen.

6. Hydrauliksystem (10) nach einem der vorhergehenden Ansprüche, wobei die wenigstens eine Sensoreinheit einen dem schaltbaren Ventil (22) zugeordneten Ventilsensor (36) umfasst, welcher dazu eingerichtet ist, eine Schaltdauer des Ventils (22) zu messen und/oder wobei die Berechnungseinheit (26) dazu eingerichtet ist, Daten von einer das schaltbare Ventil (22) ansteuernden Steuereinrichtung zu empfangen, welche eine Schaltdauer des Ventils (22) repräsentieren.

7. Arbeitsmaschine, insbesondere Kipperfahrzeug, umfassend ein Hydrauliksystem (10) nach einem der vorhergehenden Ansprüche.

8. Arbeitsmaschine nach Anspruch 7,
wobei der Antriebsmotor (12) des Hydrauliksystems (10) durch einen Motor der Arbeitsmaschine gebildet ist, welcher dazu eingerichtet ist, über einen Nebenabtrieb (14) die Hydraulikpumpe (16) zu betreiben.

9. Verfahren zum Berechnen einer momentanen Arbeitsposition eines Hydraulikzylinders (24) in einem Hydrauliksystem (10) nach einem der Ansprüche 1 bis 6, umfassend die Schritte:

- Betreiben des Antriebsmotors (12) zum Betreiben der Hydraulikpumpe (16);

- Erfassen der Größe, welche einen Volumenstrom von Hydraulikfluid zu dem Hydraulikzylinder (24) repräsentiert; durch die wenigstens eine Sensoreinheit (28, 30, 32, 34, 36); und

- Berechnen der momentanen Arbeitsposition des Hydraulikzylinders (24) anhand der von der wenigstens einen Sensoreinheit (28, 30, 32, 34, 36) erfassten Daten auf Grundlage einer bekannten Geometrie des Hydraulikzylinders (24) durch die Berechnungseinheit (26).

**Fig. 1**

Hub

Hub

10

36

26

28

22

18

16

20

34

12

V

32

M

30

24

14

Europäisches
Patentamt

European
Patent Office

Office européen
des brevets

## EUROPÄISCHER RECHERCHENBERICHT

**Nummer der Anmeldung**

**EP 22 16 9191**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 195 08 346 C1 (JUNGHEINRICH AG [DE]) 20. Juni 1996 (1996-06-20) * Spalte 1, Zeile 62 – Spalte 2, Zeile 37 * | 1,4,7,9 | INV. F15B15/28 B60P1/28 |
| | ----- | | |
| X | DE 10 2019 211880 A1 (TADANO FAUN GMBH [DE]) 11. Februar 2021 (2021-02-11) * Absätze [0004], [0007], [0025] – [0027] * | 1,2,7,9 | |
| | ----- | | |
| X | DE 43 06 680 A1 (JUNGHEINRICH AG [DE]) 8. September 1994 (1994-09-08) * Spalte 1, Zeilen 37-57 * * Spalte 3, Zeile 13 – Spalte 4, Zeile 3 * | 1,5,7,9 | |
| | ----- | | |
| X | DE 10 2005 037033 A1 (CATERPILLAR INC [US]) 6. April 2006 (2006-04-06) * Absätze [0014], [0020] – [0024] * | 1,6,7,9 | |
| | ----- | | |
| X | US 6 520 008 B1 (STRAGIER MARCEL G [US]) 18. Februar 2003 (2003-02-18) * Spalte 4, Zeilen 4-34 * | 1,4,7-9 | RECHERCHIERTE SACHGEBIETE (IPC) |
| | ----- | | F15B B60P |
| X | DE 10 2016 109801 A1 (STILL GMBH [DE]) 30. November 2017 (2017-11-30) * Absatz [0034] * | 1,3,7,9 | |
| | ----- | | |

Der vorliegende Recherchenbericht wurde für alle Patentansprüche erstellt

| Recherchenort | Abschlußdatum der Recherche | Prüfer |
|---|---|---|
| München | 23. August 2022 | Toffolo, Olivier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 16 9191

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-08-2022

| Im Recherchenbericht angeführtes Patentdokument | Datum der Veröffentlichung | Mitglied(er) der Patentfamilie | Datum der Veröffentlichung |
|---|---|---|---|
| DE 19508346 C1 | 20-06-1996 | KEINE | |
| DE 102019211880 A1 | 11-02-2021 | KEINE | |
| DE 4306680 A1 | 08-09-1994 | KEINE | |
| DE 102005037033 A1 | 06-04-2006 | DE 102005037033 A1<br>US 2006064971 A1 | 06-04-2006<br>30-03-2006 |
| US 6520008 B1 | 18-02-2003 | KEINE | |
| DE 102016109801 A1 | 30-11-2017 | DE 102016109801 A1<br>EP 3249241 A1 | 30-11-2017<br>29-11-2017 |

EPO FORM P0461

Für nähere Einzelheiten zu diesem Anhang : siehe Amtsblatt des Europäischen Patentamts, Nr.12/82